# EUROPEAN PATENT APPLICATION

(11) **EP 3 496 268 A1**
(43) Date of publication of application: **12.06.2019**
(21) Application number: 17905909.2
(22) Date of filing: 28.11.2017
(51) Int. Cl.: H02S 20/10

(54) **GROUND PHOTOVOLTAIC POWER GENERATION MODULE UNIT AND GROUND PHOTOVOLTAIC POWER GENERATION MODULE**

(30) Priority: 13.10.2017 CN 201721320066 U
(71) Applicant: Beijing Apollo Ding Rong Solar Technology Co., Ltd., Beijing 100176 (CN)
(72) Inventor: LV, Hejiang, Beijing 100176 (CN); JIANG, Wei, Beijing 100176 (CN); WANG, Hong, Beijing 100176 (CN); ZHANG, Xueliang, Beijing 100176 (CN); QI, Weibin, Beijing 100176 (CN); LIN, Junrong, Beijing 100176 (CN)
(74) Representative: Roman, Alexis
(86) International application number: PCT/CN2017/113238
(87) International publication number: WO 2019/071757

(57) **Abstract**

The utility model discloses a ground photovoltaic power generation module unit and a ground photovoltaic power generation module. The ground photovoltaic power generation module unit includes: a support frame, whose side face is provided with a lapping portion; a photovoltaic module, two ends of which are lapped at the lapping portion; and load-bearing glass, bottom faces at two ends of the load-bearing glass being fixed to a top of the support frame. A preset clearance is provided between the load-bearing glass and the photovoltaic module. In the ground photovoltaic power generation module unit and the ground photovoltaic power generation module provided by the utility model, the support frame is arranged to be supported on a road surface and to support the photovoltaic module, and the load-bearing glass is arranged to protect and cover the photovoltaic module. The ground photovoltaic power generation module unit and the ground photovoltaic power generation module are low in installation cost, convenient for maintenance and time-saving, and can be installed in different roadbed conditions. The photovoltaic module may adopt a high-quality CIGS module. The ground photovoltaic power generation module unit and the ground photovoltaic power generation module are higher in power generation efficiency and shorter in cost recovery time and saving in land utilization, etc.

## Description

### TECHNICAL FIELD

Embodiments of the present disclosure relate to solar photovoltaic technologies, and more particularly, to a ground photovoltaic power generation module unit and a ground photovoltaic power generation module.

### BACKGROUND

With the development of society, human need more and more energy, and thus pollution problems become increasingly severe and depletion of fossil energy is increasingly serious. Therefore, diversified supply of energy particularly clean and environment-friendly energy is of high importance.

Now, a large number of large-scale centralized power stations and small-scale distributed power stations have been built all over the world. An excess of photovoltaic power stations have been built in underdeveloped regions, where power demand is so small that some photovoltaic power stations need to be abandoned However, developed regions are unable to provide more installation space. These circumstances have limitation to the development of the photovoltaic power stations. However, the vast of superior road pavement is the new continent of the photovoltaic power plants because mounting solar power generation components on the road does not occupy additional land or space.

### SUMMARY

This embodiment provides a ground photovoltaic power generation module unit and a ground photovoltaic power generation module to expand application space of photovoltaic power generation technologies on road pavement.

This embodiment provides a ground photovoltaic power generation module unit, which includes:
a support frame, whose side face is provided with a lapping portion;
a photovoltaic module, two ends of which are lapped at the lapping portion; and
load-bearing glass. Bottom surfaces at two ends of the load-bearing glass are fixed to a top of the support frame. A preset clearance is provided between the load-bearing glass and the photovoltaic module.

Alternatively, the aforementioned ground photovoltaic power generation module unit further includes an I-shaped steel. A bottom end of the I-shaped steel is fixed to a cement road block, and a top of the I-shaped steel is fixedly connected to a bottom of the support frame.

In the aforementioned ground photovoltaic power generation module unit, alternatively, a rubber pad is provided between the top of the I-shaped steel and a bottom bracket of the support frame.

In the aforementioned ground photovoltaic power generation module unit, alternatively, the number of the I-shaped steels is two, the two I-shaped steels are perpendicular to one another, and a perpendicular intersection of the two I-shaped steels is fixedly connected by means of an angle iron and a fastener.

In the aforementioned ground photovoltaic power generation module unit, alternatively, either of the I-shaped steels is provided with a wire passing hole.

In the aforementioned ground photovoltaic power generation module unit, alternatively, the load-bearing glass is double-glazed laminated antiskid glass.

In the aforementioned ground photovoltaic power generation module unit, alternatively, the bottom faces at two ends of the load-bearing glass are bonded and fixed to the top of the support frame by means of a structural adhesive.

Alternatively, the aforementioned ground photovoltaic power generation module unit further includes a protective side frame, which is arranged at two ends of the load-bearing glass and the support frame. The protective side frame is fixedly connected to the support frame by means of a bolt.

In the aforementioned ground photovoltaic power generation module unit, alternatively, the support frame is made of aluminum alloy.

This embodiment also provides a ground photovoltaic power generation module photovoltaic device, which includes a plurality of ground photovoltaic power generation module units provided by this embodiment. Adjacent ground photovoltaic power generation module units are fixedly connected to one another.

In the ground photovoltaic power generation module unit and the ground photovoltaic power generation module provided by this embodiment, the support frame is arranged to be supported on a road surface and to support the photovoltaic module, and the load-bearing glass is arranged to protect and cover the photovoltaic module. The ground photovoltaic power generation module unit and the ground photovoltaic power generation module are low in installation cost, convenient for maintenance and time-saving, and can be installed in different roadbed conditions. The photovoltaic module may adopt a high-quality CIGS module. The ground photovoltaic power generation module unit and the ground photovoltaic power generation module are higher in power generation efficiency and shorter in cost recovery time and saving in land utilization, etc.

### BRIEF DESCRIPTION OF THE DRAWING

FIG. 1 is a schematic structural diagram of a ground photovoltaic power generation module unit according to Embodiment I;
FIG. 2 is an enlarged view of an end in FIG. 1;
FIG. 3 is a state diagram showing a ground photovoltaic power generation module unit installed on a cement road block according to Embodiment I;
FIG. 4 is a state diagram showing a ground photovoltaic power generation module unit installed on a cement road block according to Embodiment II;
FIG. 5 is an enlarged view of Part A in FIG. 4; and
FIG. 6 is a structural top view of a ground photovoltaic power generation module unit according to Embodiment II;

Reference numbers in the attached drawings:
Ground photovoltaic power generation module unit 100; support frame 110; lapping portion 111; photovoltaic module 120; junction box 121; load-bearing glass 130; clearance 140; I-shaped steel 150; wire passing hole 151; protective side frame 160; angle iron 170; rubber pad 180; fastener 190; and cement road block 200.

### DETAILED DESCRIPTION OF THE EMBODIMENTS

Embodiments of the present disclosure are described in detail as below. Examples of the embodiments are as shown in drawings, in which same or similar reference numbers always represent same or similar elements or elements with same or similar functions. The embodiments described below with reference to the drawings are exemplary, just used for explaining the embodiments, not construed as limiting the embodiments.

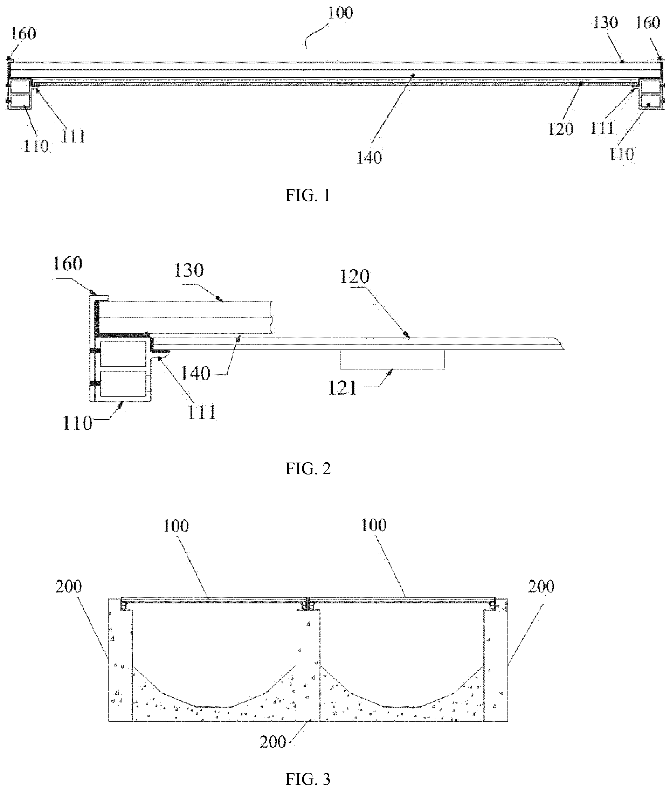

FIG. 1 is a schematic structural diagram of a ground photovoltaic power generation module unit according to Embodiment I; FIG. 2 is an enlarged view of an end in FIG. 1; and FIG. 3 is a state diagram showing a ground photovoltaic power generation module unit installed on a cement road block according to Embodiment I. As shown in FIG. 1-FIG. 3, this embodiment provides a ground photovoltaic power generation module unit 100, which includes: a support frame 110, a photovoltaic module 120, and load-bearing glass 130.

The support frame 110 is used for fixing to a cement road block 200, where a side face of the support frame 110 is provided with a lapping portion 111, which extends along the side face of the support frame 110. Preferably the support frame 110 is made of aluminum alloy to implement light weight. Two ends of the photovoltaic module 120 are lapped at the lapping portion 111. Preferably, the photovoltaic module 120 is a double-glazed thin-film photovoltaic module, two ends of which are bonded to the lapping portion 111 by means of an adhesive. Preferably, the load-bearing glass 130 is double-glazed laminated antiskid glass, where bottom faces at two ends of the load-bearing glass 130 are fixed to a top of the support frame 110, preferably bonded and fixed to the top of the support frame 110 by means of a structural adhesive. A preset clearance 140 is provided between the load-bearing glass 130 and the photovoltaic module 120.

The ground photovoltaic power generation module unit provided by this embodiment is supported on a road surface by means of the support frame 110 and supports the photovoltaic module 120. The load-bearing glass 130 is arranged to protect and cover the photovoltaic module 120. The ground photovoltaic power generation module unit is low in installation cost, convenient for maintenance and time-saving, and can be installed in different roadbed conditions. The photovoltaic module 120 may adopt a high-quality CIGS module. The ground photovoltaic power generation module unit is higher in power generation efficiency and shorter in cost recovery time and saving in land utilization, etc.

Preferably, the ground photovoltaic power generation module unit 100 further includes a protective side frame 160, which is arranged at two ends of the load-bearing glass 130 and the support frame 110 and is fixedly connected to the support frame 110 by means of a bolt. The protective side frame 160 can protect the photovoltaic module 120 and the side face of the support frame 110 to prevent units from being damaged due to collision.

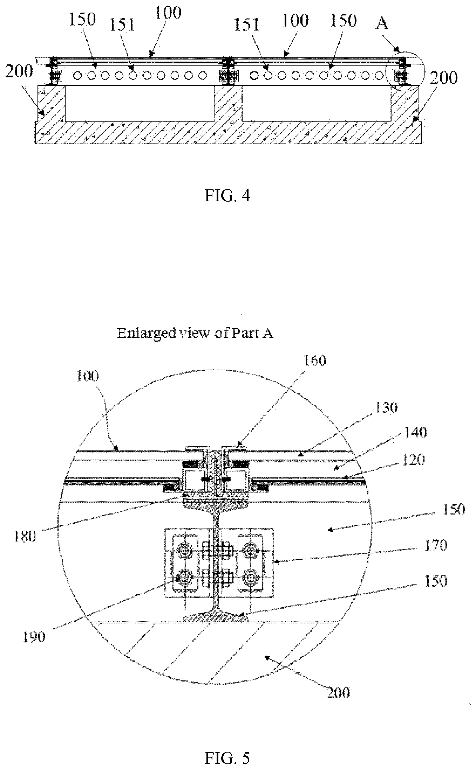

FIG. 4 is a state diagram showing a ground photovoltaic power generation module unit installed on a cement road block according to an embodiment, and FIG. 5 is an enlarged view of Part A in FIG. 4.

As shown in FIG. 4 and FIG. 5, this embodiment provides a ground photovoltaic power generation module unit 100, which includes: a support frame 110, a photovoltaic module 120, and load-bearing glass 130. On this basis, the ground photovoltaic power generation module unit 100 further includes an I-shaped steel 150. A bottom end of the I-shaped steel 150 is fixed to a cement road block 200, and a top of the I-shaped steel 150 is fixedly connected to a bottom of the support frame 110.

Preferably, a rubber pad 180 is provided between the top of the I-shaped steel 150 and a bottom bracket of the support frame 110. Skid resistance and shock resistance may be achieved and comfortability of running or walking on the rubber pad may be increased by paving the rubber pad 180 on the I-shaped steel 150. The support frame 110 is mounted on the rubber pad 180, and peripheries thereof are coated with weather-resistant sealant. Each photovoltaic module 120 is electrically connected by means of a junction box 121 and then is fixed by means of a wire clamp.

Preferably, the number of the I-shaped steels 150 is two, the two I-shaped steels 150 are perpendicular to one another, and a perpendicular intersection of the two I-shaped steels 150 is fixedly connected by means of an angle iron 170 and a fastener 190.

Further, either of the I-shaped steels 150 is provided with a wire passing hole 151. A lead wire obtained by connecting each of the photovoltaic modules 120 may be led out of the wire passing hole 151. The wire passing hole 151 also can play a role in weight reduction.

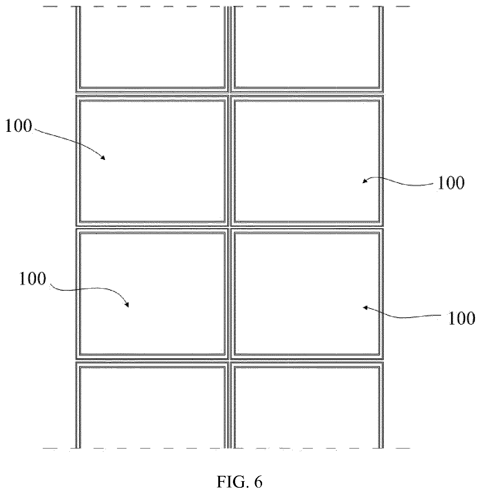

This embodiment further provides a ground photovoltaic power generation module photovoltaic device. As shown in FIG. 6, the ground photovoltaic power generation module photovoltaic device includes a plurality of the ground photovoltaic power generation module units 100 provided by this embodiment, and adjacent ground photovoltaic power generation module units 100 are fixedly connected to one another by means of a connecting piece. Specifically, adjacent ground photovoltaic power generation module units 100 may be fixed to two sides of the rubber pad 180. There are a variety of arrangement modes of a plurality of photovoltaic module units 100, as long as they can satisfy use requirements. For example, a plurality of photovoltaic module units 100 are arranged in a straight line, or a plurality of photovoltaic module units 100 are arranged in a rectangular structure, or a plurality of photovoltaic module units 100 are arranged in a trapezoid structure.

The structure, features and effects of this embodiment are described above in detail based on the embodiments as shown in the figures, and the above embodiments are merely preferred embodiments of the present disclosure. However, the present disclosure does not limit the scope of implementation according to what is shown in the figures. Any modifications made in accordance with the conception of the embodiments or equivalent embodiments revised as equivalent changes shall fall within the scope of protection of the present disclosure as long as they are within the specification and the spirit covered by the drawings.

## Claims

1. A ground photovoltaic power generation module unit (100), comprising:
a support frame (110), whose side face is provided with a lapping portion (111);
a photovoltaic module (120), two ends of which are lapped at the lapping portion (111); and
load-bearing glass (130), bottom faces at two ends of the load-bearing glass (130) being fixed to a top of the support frame (110), and a preset clearance being provided between the load-bearing glass (130) and the photovoltaic module (120).

2. The ground photovoltaic power generation module unit (100) according to claim 1, further comprising an I-shaped steel (150), wherein a bottom end of the I-shaped steel (150) is fixed to a cement road block (200), and a top of the I-shaped steel (150) is fixedly connected to a bottom of the support frame (110).

3. The ground photovoltaic power generation module unit (100) according to claim 2, wherein a rubber pad (180) is provided between the top of the I-shaped steel (150) and a bottom bracket of the support frame (110).

4. The ground photovoltaic power generation module unit (100) according to claim 2, wherein the number of the I-shaped steels (150) is two, the two I-shaped steels (150) are perpendicular to one another, and a perpendicular intersection of the two I-shaped steels (150) is fixedly connected by means of an angle iron (170) and a fastener (190).

5. The ground photovoltaic power generation module unit (100) according to claim 4, wherein either of the I-shaped steels (150) is provided with a wire passing hole (151).

6. The ground photovoltaic power generation module unit (100) according to any one of claims 1-5, wherein the load-bearing glass (130) is double-glazed laminated antiskid glass.

7. The ground photovoltaic power generation module unit (100) according to any one of claims 1-5, wherein the bottom faces at two ends of the load-bearing glass (130) are bonded and fixed to the top of the support frame (110) by means of a structural adhesive.

8. The ground photovoltaic power generation module unit (100) according to any one of claims 1-5, further comprising a protective side frame (160), wherein the protective side frame (160) is arranged at two ends of the load-bearing glass (130) and the support frame (110), and the protective side frame (160) is fixedly connected to the support frame (110) by means of a bolt.

9. The ground photovoltaic power generation module unit (100) according to any one of claims 1-5, wherein the support frame (110) is made of aluminum alloy.

10. A ground photovoltaic power generation module, comprising the ground photovoltaic power generation module unit (100) according to any one of claims 1-9, wherein adjacent ground photovoltaic power generation module units (100) are fixedly connected to one another.
